# EUROPÄISCHE PATENTSCHRIFT

(11) **EP 0 813 580 B1**
(45) Veröffentlichungstag und Bekanntmachung des Hinweises auf die Patenterteilung: **14.05.2003**
(21) Anmeldenummer: 96905832.0
(22) Anmeldetag: 01.03.1996
(51) Int. Cl.: C09D 167/00, C08G 18/42, H01B 3/42, H01B 3/30, C09D 175/06, C09D 179/08

(54) **DRAHTBESCHICHTUNGSMITTEL SOWIE VERFAHREN ZU DESSEN HERSTELLUNG**
WIRE COATING MEDIUM AND PROCESS FOR PRODUCING THE SAME
PRODUIT D'ENDUCTION DE FILS METALLIQUES ET SON PROCEDE DE PREPARATION

(30) Priorität: 07.03.1995 DE 19507942
(43) Veröffentlichungstag der Anmeldung: 29.12.1997
(73) Patentinhaber: SCHENECTADY INTERNATIONAL, INC., Schenectady New York 12309 (US)
(72) Erfinder: SCHINK, Michael, D-22587 Hamburg (DE); RIX, Geoff, Sussex (GB); KIRWIN, John, Billingsley Bridgenorth Shrops (GB)
(74) Vertreter: Fitzner, Uwe, Dr.
(86) Internationale Anmeldenummer: EP9600839
(87) Internationale Veröffentlichungsnummer: WO96027643

(56) Entgegenhaltungen:
- US-A- 3 374 114
- DATABASE WPI Week 9140 Derwent Publications Ltd., London, GB; AN 91-291110 XP002005637 & JP,A,03 192 739 (TANAKA DENSHI KOGYO) , 22.August 1991
- DATABASE WPI Week 9301 Derwent Publications Ltd., London, GB; AN 93-002861 XP002005638 & JP,A,04 328 171 (NIPPON ESTER CO LTD) , 17.November 1992

## Beschreibung

Die vorliegende Erfindung betrifft ein Drahtbeschichtungsmittel, enthaltend Polyesterimidharze.

Die heute üblicherweise eingesetzten Drahtbeschichtungsmittel stellen im allgemeinen Lösungen der typischen Bindemittel, wie beispielsweise Polyester, Polyesterimide und hydroxylgruppenhaltige Polyester mit blockierten Isocyanaten in Lösemitteln, ggf. in Kombination mit handelsüblichen Kohlenwasserstoffverschnitten, dar.

Drahtbeschichtungsmittel auf der Basis von Polyesterharzen sind beispielsweise aus der US-PS 3342780, der US-PS 3249578, der EP-B-144281 und der PCT/EP 92/02776 bekannt Als Hydroxylkomponente wird in den genannten Druckschriften Tris-(2-hydroxyethyl)-isocyanurat (THEIC) eingesetzt.

Aus der US 3,374,114 sind Drahtbeschichtungsmittel enthaltend Polyesterharze bekannt, wobei die verwendeten Polyester aus Naphthalindicarbonsäurederivaten, anderen Dicarbonsäuren und Polyolkomponenten dargestellt werden. Zur Vernetzung können Isocyanatkomponenten verwendet werden.

Die mit Drahtbeschichtungsmitteln auf Basis von Polyesterharzen beschichteten Drähte zeichnen sich dadurch aus, daß der Lackfilm eine gute Haftung auf Kupferdrähten besitzt Außerdem weisen die beschichteten Drähte einen hohen Wärmedruck auf, wenn die verwendeten Polyesterharze mit THEIC modifiziert sind.

Aus der PCT/EP92/02776 ist ferner bekannt, daß durch Zumischen von Bismaleinimidharzen das Eigenschaftsniveau von mit THEIC modifizierten Polyesterbeschichtungsmitteln vor allem die Wärmeschockbeständigkeit und der Wärmedruck signifikant angehoben werden können.

Der Nachteil der Drahtbeschichtungsmittel auf der Basis von Polyesterharzen besteht darin, daß die mit Polyesterharzlacken beschichteten Drähte einen geringen Wärmeschock aufweisen. Die mit THEIC modifizierten Polyesterharzlacke werden daher in Form von Zweischichtlackierungen für Drähte derart verwendet, daß die Polyesterharzbeschichtungen den Grundlack bilden, auf den z.B. Polyamidimid-Drahtlack als Decklack aufgebracht wird.

Polyesterimidharze sind beispielsweise aus der DE-OS 1445263 und 1495100 sowie WO 91/07469 (PCT-EP 90/01911) bekannt. Sie haben aufgrund ihrer guten mechanischen, thermischen und chemischen Eigenschaften eine breite Verwendung im Maschinenbau gefunden. An die Zweischichtlackierung mit einem Polyamidimid als Decklack kommen die Polyesterimide in ihren thermischen und chemischen Eigenschaften nicht heran.

Elektroisolierbeschichtungsmittel auf der Basis von Polyurethanen sind beispielsweise in der DE-144749 und DE-1957157 beschrieben. Derartige Elektroisolierbeschichtungsmittel zeichnen sich bei ihrer Verwendung als Drahtbeschichtungsmittel insbesondere durch ihre guten isolierenden Eigenschaften aus. Ferner haben sie den Vorteil, daß sie verzinnbar sind. Verzinnbare isolierte Drähte geben beim Eintauchen in ein auf erhöhte Temperaturen erhitztes Lötbad unter Zerstörung der Isolierschicht das blanke Metall des Leiters frei, das somit für elektrisch leitende Verbindungen unmittelbar zugänglich ist. Wichtig ist hierbei, daß die Zeit zur Entfernung der isolierenden Lackschicht möglichst kurz ist. Der Forderung nach großer Thermofabilität unter den Lötbedingungen steht eine hohe Thermostabilität, die von beschichteten Drähten für den Einsatz in elektrischen Bauteilen gefordert wird, gegenüber. Diese Forderung nach verbesserter Thermostabilität lötbarer Lackdrähte steht prinzipiell im Widerspruch zu einer kurzen Verzinnungszeit, die für eine schnelle Verarbeitung der Drähte verlangt wird.

Die der vorliegenden Erfindung zugrundeliegende Aufgabe besteht somit darin, Drahtbeschichtungsmittel, enthaltend Polyesterimidharze zur Verfügung zu stellen, die die Nachteile der bisher bekannten Beschichtungsmittel vermeiden und damit deren Eigenschaftsprofil signifikant verbessern. Die erfindungsgemäßen Drahtbeschichtungsmittel sollen insbesondere lagerstabil sein, eine gute Haftung insbesondere auf Kupferdrähten, einen möglichst hohen Wärmedruck sowie einen hohen Wärmeschock aufweisen. Außerdem sollen die Drahtbeschichtungsmittel einen möglichst hohen Festkörpergehalt bei einer für die Verarbeitung günstigen Viskosität haben. Im Falle des Einsatzes von Polyurethandrahtbeschichtungsmitteln soll zugleich eine verkürzte Verzinnungszeit erzielt werden.

Diese Aufgabe wird überraschend dadurch gelöst, daß das Drahtbeschichtungsmittel aus mehrwertigen Alkoholen, die mit Naphthalindicarbonsäure und/oder deren veresterbaren Derivaten ggf. im Gemisch mit weiteren Dicarbonsäuren und/oder deren Dicarbonsäurederivaten verestert sind, Katalysatoren, organischen Lösemitteln und Additiven sowie imidgruppenhaltigen bzw. imidgruppenbildenden Ausgangsstoffen besteht.

Im Gegensatz zu dem zitierten Stand der Technik werden somit erfindungsgemäß als Carbonsäurekomponenten Naphthalindicarbonsäuren oder deren Derivate verwendet. Es ist überraschend und war nicht vorhersehbar, daß durch die Modifizierung mit Naphthalindicarbonsäuren bzw. deren Derivaten Drahtbeschichtungen erhalten werden, die sehr gut auf elektrischen Leitem, insbesondere auf Kupferdrähten haften und die zu Beschichtungen mit hervorragenden technologischen Eigenschaften führen. Vor allem zeichnen sich die mit Naphthalindicarbonsäuren hergestellten Beschichtungen durch einen hohen Wärmedruck und -schock sowie gute Lagerstabilität und hohen Festkörpergehalt bei einer für die Verarbeitung günstigen Viskosität aus.

Geeignete Naphthalindicarbonsäuren sind insbesondere 1,4-, 1,8-, 2,3- und 2,6-Naphthalindicarbonsäure. Besonders bevorzugt wird 2,6-Naphthalindicarbonsäure.

Verwendbar sind auch die Ester und Säurehalogenide dieser Verbindungen. Zu den einsetzbaren, veresterbaren Derivaten zählen insbesondere Methyl-, Ethyl-, Propyl-, Butyl-, Amyl-, Hexyl- und Octylnaphthalate. Einsetzbar sind sowohl die Halbester, die Dialkylester als auch Mischungen dieser Verbindungen.

Die Naphthalindicarbonsäuren bzw. deren Derivate können als einzige Säurekomponente oder im Gemisch mit anderen Carbonsäuren zum Einsatz kommen.

Geeignete Carbonsäuren für derartige Gemische mit Naphthalindicarbonsäuren bzw. deren Derivaten sind beispielsweise Phthalsäure, Isophthalsäure, Terephthalsäure sowie deren veresterbare Derivate, z.B. Methyl-, Ethyl-, Propyl-, Butyl-, Amyl-, Hexyl- und Octylester. Einsetzbar sind auch hier sowohl die Halbester, die Dialkylester wie auch die Mischungen dieser Verbindungen. Ebenso wie bei den oben erwähnten Naphthalaten kommen auch die Säurehalogenide in Betracht.

In Frage kommen erfindungsgemäß auch aliphatische Dicarbonsäuren, z.B. Oxalsäure, Malonsäure, Succinsäure, Glutarsäure, Adipinsäure, Pimelinsäure, Azelainsäure, Sebacinsäure, Maleinsäure, Fumarsäure oder Sorbinsäure. Das Verhältnis von Naphthalindicarbonsäuren zu den genannten weiteren Carbonsäuren wird so gewählt, daß die Bindemittel 1 bis 100 Mol-% Naphthalindicarbonsäure und 0 bis 99 Mol.-% weitere Dicarbonsäuren, bezogen auf 100 Mol.-% Gesamtcarbonsäure, enthalten.

Im folgenden werden die für die Herstellung der erfindungsgemäßen Drahtbeschichtungsmittel einsetzbaren Komponenten im einzelnen beschrieben:

Für die erfindungsgemäßen Drahtbeschichtungen geeignete organische Lösemittel sind kresolische und nicht-kresolische organische Lösemittel. Beispiele sind Kresol, Xylenol, Phenol, Phenylglycol, Butylglycol, Methyldiglycol, Ethyldiglycol, Butyldiglycol. In Betracht kommen auch Glycoletherester, beispielsweise Methylglycolacetat, Ethylglycolacetat, und Butylglycolacetat.

Weitere Beispiele sind cyclische Carbonate wie Ethylencarbonat, Polypropylencarbonat, cyclische Ester wie γ-Butyrolacton sowie andere Lösemittel, wie Dimethylformamid, N,N-Dimethylacetamid, N-Methylpyrrolidon und Benzylalkohol, die ggf. in Kombination mit den genannten Lösemitteln eingesetzt werden.

Die organischen Lösemittel können teilweise mit Verschnittmitteln verwendet werden. Vorzugsweise werden entweder reines Lösemittel bzw. Lösemittelgemische wie Xylol, Toluol, Ethylbenzol, Cumol, Solventnaphtha®, Solvesso® und Shellsol®-Typen verwendet.

Als Hilfsstoffe für die Drahtbeschichtungsmittel können beispielsweise verlaufsverbessernde Melaminharze oder Verlaufsmittel auf Basis von Polyacrylaten eingesetzt werden.

Die Drahtbeschichtungsmittel werden mittels üblicher Drahäackiermaschinen verarbeitet. Dabei wird die jeweils erforderliche Lackfilmstärke durch mehrere Einzelaufträge aufgebaut, wobei jeder einzelne Lackauftrag vor dem erneuten Lackauftrag blasenfrei ausgehärtet wird. Typische Ofentemperaturen liegen zwischen 300 und 550°C.

Die in der beschriebenen Weise hergestellten Drahtbeschichtungsmittel *sind* überraschend lagerstabil und weisen einen hohen Festkörpergehalt bei für die Vorarbeitung günstiger Viskosität auf, obwohl die eingebaute Naphthalindicarbonsäure ein hohes Molekulargewicht und eine starre Struktur besitzt. Es war daher ansich für den Fachmann zu erwarten, daß das Polyesterharz eine hohe Kristallinität und damit Schwerlöslichkeit aufweist.

Die aus den erfindungsgemäßen Drahtbeschichtungsmittein nach dem Lackieren und Einbrennen erhaltenen Überzüge weisen eine überraschend gute Haftung auf Elektroleitem, insbesondere Kupferdrähten auf. Überraschenderweise wurde gefunden, daß die aus den erfindungsgemäßen Drahtbeschichtungsmitteln resultierenden Überzüge ein außergewöhnlich gutes Eigenschaftsprofil aufweisen. Es war insbesondere nicht vorhersehbar, daß die mit den erfindungsgemäßen Überzügen beschichteten Drähte nicht nur einen hervorragenden Wärmedruck aufweisen, sondern auch eine ausgezeichnete Wärmeschockbeständigkeit sowie einen hohen tan-δ-Steilanstieg haben. Ein derartig hohes Eigenschaftsniveau konnte bisher mit einem nicht in der beschriebenen Weise modifizierten Polyesterdrahtlack nicht erreicht werden.

Die Herstellung der erfindungsgemäß verwendbaren Polyesterimidharze erfolgt durch Veresterung der oben beschriebenen Naphthalindicarbonsäuren bzw. deren Derivaten, oder deren Gemischen mit weiteren Carbonsäuren bzw. deren Derivaten mit mehrwertigen Alkoholen, ggf. unter Zusatz von Oxicarbonsäuren und unter Verwendung von imidgruppenbildenden Ausgangsstoffen. Anstelle der freien Säuren und Alkohole können auch deren reaktionsfähige Derivate eingesetzt werden.

Als mehrwertige Alkohole kommen sowohl Diole als auch Triole in Betracht. Beispiele sind Ethylenglycol, 1,2- und 1,3-Propylenglycol, 1,2-, 1,3- und 1,4-Butandiol, 1,5-Pentandiol und Neopenthylglycol, Diethylenglycol, Triethylenglycol, Glycerin, Trimethylolpropan sowie THEIC. Das letztgenannte Triol kommt bevorzugt zum Einsatz . Dessen Verwendung führt zu einer Erhöhung der Erweichungstemperatur des erhaltenen Lackbeschichtungsmittels.

Die imidgruppenbildenden Ausgangsstoffe können beispielsweise durch Reaktion zwischen Verbindungen erhalten werden, von denen die eine fünfgliedrige, cyclische Carbonsäureanhydridgruppierung sowie mindestens eine weitere funktionelle Gruppe besitzt, während die andere außer einer primären Aminogruppe noch mindestens eine weitere funktionelle Gruppe enthält. Diese weiteren funktionellen Gruppen sind vor allem Carboxylgruppen oder Hydroxylgruppen. Es können aber auch weitere primäre Aminogruppen oder Carbonsäureanhydridgruppen zum Einsatz kommen.

Beispiele für einsetzbare Amine sind insbesondere diprimäre Diamine, z.B. Ethylendiamin, Tetramethylendiamin, Hexamethylendiamin, Nonamethylendiamin und andere aliphatische diprimäre Diamine. Femer kommen in Betracht aromatische diprimäre Diamine, wie Diaminodiphenylmethan, Diaminodiphenylketon, -sulfon, sulfoxid, -ether, -thioether, Phenylendiamine, Toluylendiamin. In Frage kommen schließlich cycloaliphatische Diamine, wie das 4,4'-Dicyclohexylmethandiamin. Als aminogruppenhaltige Verbindungen mit einer weiteren funktionellen Gruppe sind ferner auch Aminoalkohole verwendbar, z.B. Monoethanolamin und Monopropanolamine, weiterhin Aminocarbonsäuren wie Glycin, Aminopropionsäuren, Aminocapronsäuren oder Aminobenzoesäuren.

Zur Herstellung der Polyesterimidharze werden die bekannten Katalysatoren verwendet. Beispielsweise kommen Schwermetallsalze, Bleiacetate, Zinkacetat, weiterhin organische Titanate wie Tetra-n-butyltitanat, Cerverbindungen sowie organische Säuren wie p-Toluolsulfonsäure in Betracht. Als Katalysatoren bei der Aushärtung der Polyesterimide können die genannten Katalysatoren - zweckmäßigerweise in einem Anteil bis zu 5 Gew.-%, vorzugsweise bis zu 3 Gew.-%, bezogen auf das Bindemittel - ebenfalls verwendet werden.

Die Polyesterimide werden in den erfindungsgemäßen Drahtbeschichtungsmitteln üblicherweise in Mengen von 15 bis 65 Gew.-%, vorzugsweise 15 bis 60 Gew.-%, insbesondere 25 bis 55 Gew.-% eingesetzt. Ganz besonders bevorzugte Bereiche sind 30 bis 55 Gew.-%, insbesondere 30 bis 50 Gew.-%, bezogen auf das Gesamtgewicht des Drahtbeschichtungsmittels.

Die Überzugsmittel weisen darüber hinaus eine gute Lagerstabilität und eine gute Haftung auf Kupferdrähten auf. Es ist überraschend, daß nicht nur die erwähnten Eigenschaften, sondern auch ein hervorragender Wärmedruck und eine ausgezeichnete Wärmeschockbeständigkeit sowie ein hoher tan-δ Steilanstieg erreicht werden. Weiterhin ist es überraschend, daß die erfindungsgemäßen Überzugsmittel mit einer 20%igen Steigerung der Abzugsgeschwindigkeit verarbeitet werden können. Im folgenden wird die Erfindung anhand von Beispielen näher erläutert.

Die in den erfindungsgemäßen Drahtüberzugsmitteln eingesetzten Bindemittel ( Polyesterimide ) können durch das Verfahren der Schmelzkondensation oder durch Lösungskondensation in *einem* adäquaten Lösemittel, z.B. Kresol, Xylenol, N-Methylpyrolidon, Methyldiglycol, Ethyldiglycol oder Ethylenglycol hergestellt werden.

### Beispiel 1:

### Herstellung eines 2,6-Naphthalindicarbonsäure-haltigen imidmodifizierten Polyesters 1

Aus 59,76 g Ethylenglykol, 59,79 g Glycerin, 23,11 g Xylol, 87,30 g Dimethylterephthalat, 109,79 g 2,6-Naphthalindicarbonsäuredimethylester und 0,36 g Butyltitanat wird durch Erhitzen auf 200°C ein Polyesterharz hergestellt. Dabei werden 65,82 g Destillat erhalten. Bei 200°C werden sofort 354,79 g Kresol und nach Kühlen auf 90°C 76,28 g Diaminodiphenylmethan und 148,13 g Trimellithsäureanhydrid hinzugegeben. Durch Aufheizen auf 200°C wird ein imidmodifizierter Polyester hergestellt. Dabei fallen weitere 30,79 g Destillat an. Es wird auf 140°C gekühlt und 40,42 g Kresol und 40,29 g Solventnaphtha zugegeben.

| | |
|---|---|
| Viskosität, 23°C | 55 Pas |
| Festkörpergehalt (2g, 1h, 200°C) | 51 % |

### Beispiel 2.

### Herstellung eines Naphthalindicarbonsäure-haltigen imidmodifizierten Polyesters 2

Aus 58,60 g Ethylenglykol, 58,60 g Glycerin, 22,47 g Xylol, 215,30 g 2,6-Naphtalindicarbonsäureester und 0,17 g Blei(II)oxid wird durch Erhitzen auf 200°C ein Polyesterharz hergestellt. Dabei werden 63,73 g Destillat erhalten. Bei 200°C werden sofort 347,48 g Kresol und nach Kühlen auf 90°C 74,79 g Diaminodiphenylmethan und 145,27 g Trimellithsäureanhydrid hinzugegeben. Durch Aufheizen auf 200°C wird ein imidmodifizierter Polyester hergestellt. Dabei fallen weitere 26,77 g Destillat an. Es wird auf 140°C gekühlt und 38,66 g Kresol und 38,66 g Solventnaphtha zugegeben.

| | |
|---|---|
| Viskosität, 23°C | 60 Pas |
| Festkörpergehalt (2g, 1h, 200°C) | 52 % |

### Beispiel 3: (Vergleichsbeispiel)

### Herstellung eines imidmodifizierten Polyesters

Aus 61,21 g Ethylenglykol, 61,21 g Glycerin, 23,47 g Xylol, 178,76 g Dimethylterephthalat und 0,18 g Blei(II)oxid wird durch Erhitzen auf 200°C ein Polyesterharz hergestellt. Dabei werden 70,13 g Destillat erhalten. Bei 200°C werden sofort 362,85 g Kresol und nach Kühlen auf 90°C 78,10 g 4,4'-Diaminodiphenylmethan und 151,70 g Trimellithsäureanhydrid hinzugegeben. Durch Aufheizen auf 200°C wird ein imidmodifizierter Polyester hergestellt. Dabei fallen weitere 25,13 g Destillat an. Es wird auf 140°C gekühlt und 42,15 g Kresol und 40,37 g Solventnaphtha zugegeben.

| | |
|---|---|
| Viskosität, 23°C | 25 Pas |
| Festkörpergehalt (2g, 1h, 200°C) | 50 % |

### Beispiel 4:

### Herstellung eines Polyurethanlackes

Bei einer Temperatur von kleiner 30°C werden zu 21,00 g 1-Methoxipropylacetat-2 7,19 g 1,3-Butandiol, 9,18 g Trimethylolpropan und 111,83 g 4,4'-Diphenylmethandiisocyanat gegeben. Das Gemisch wird unter Rühren auf 80-100°C erwärmt und solange bei dieser Temperatur gehalten, bis der Isocyanatgehalt einen Wert zwischen 12 und 17 % annimmt. Es wird auf 50-60°C gekühlt und bei dieser Temperatur 171,71 g Kresol und 57,72 g Solventnaphtha zugegeben. Das Gemisch wird auf 80-100°C erwärmt und die Temperatur solange gehalten, bis der Isocyanatgehalt einen Wert von kleiner 0,2 % annimmt. Danach wird auf 40-60°C gekühlt. Es werden 281,66 g imidmodifizierter Ester aus Beispiel 1, 229,82 g Kresol, 107,74 g Solventnaphtha und 2,15 g Zinkoktoat hinzugefügt und drei Stunden gerührt.

| | |
|---|---|
| Auslaufzeit, DIN 53 211, 4 mm bei 23°C | 48 s |
| Festkörpergehalt (1g, 1h, 180°C) | 29.4 % |

### Beispiel 5 :

### Herstellung eines Polyurethanlackes

Bei einer Temperatur von kleiner 30°C werden zu 22,25 g 1-Methoxipropylacetat-2 7,62 g 1,3-Butandiol, 9,73 g Trimethylolpropan und 118,51 g 4,4'-Diphenylmethandiisocyanat gegeben. Das Gemisch wird unter Rühren auf 80-100°C erwärmt und solange bei dieser Temperatur gehalten, bis der Isocyanatgehalt einen Wert zwischen 12 und 17 % annimmt Es wird auf 50-60°C gekühlt und bei dieser Temperatur 181,96 g Kresol und 61,17 g Solventnaphtha zugegeben. Das Gemisch wird auf 80-100°C erwärmt und die Temperatur solange gehalten, bis der lsocyanatgehalt einen Wert von kleiner 0,2 % annimmt. Danach wird auf 40-60°C gekühlt. Es werden 238,78 g imidmodifizierter Ester aus Beispiel 1, 243,53 g Kresol, 114,17 g Solventnaphtha und 2,28 g Zinkoktoat hinzugefügt und drei Stunden gerührt.

| | |
|---|---|
| Auslaufzeit, DIN 53 211, 4 mm bei 23°C | 46 s |
| Festkörpergehalt (1g, 1h, 180°C) | 30.0 % |

### Beispiel 6 :

### Herstellung eines Polyurethanlackes

Bei einer Temperatur von kleiner 30°C werden zu 19,63 g 1-Methoxipropylacetat-2 6,72 g 1,3-Butandiol, 8,58 g Trimethylolpropan und 104,48 g 4,4'-Diphenylmethandiisocyanat gegeben. Das Gemisch wird unter Rühren auf 80-100°C erwärmt und solange bei dieser Temperatur gehalten, bis der Isocyanatgehalt einen Wert zwischen 12 und 17 % annimmt. Es wird auf 50-60°C gekühlt und bei dieser Temperatur 160,47 g Kresol und 53,94 g Solventnaphtha zugegeben. Das Gemisch wird auf 80-100°C erwärmt und die Temperatur solange gehalten, bis der Isocyanatgehalt einen Wert von kleiner 0,2 % annimmt. Danach wird auf 40-60°C gekühlt. Es werden 235,10 g imidmodifizierter Ester aus Beispiel 2, 308,31 g Kresol, 100,72 g Solventnaphtha und 2,05 g Zinkoktoat hinzugefügt und drei Stunden gerührt.

| | |
|---|---|
| Austaufzeit, DIN 53 211, 4 mm bei 23°C | 59 s |
| Festkörpergehalt (1g, 1h, 180°C) | 29,8 % |

### Beispiel 7 :

### Herstellung eines Polyurethanlackes

Bei einer Temperatur von kleiner 30°C werden zu 17,22 g 1-Methoxipropylacetat-2 5,90 g 1,3-Butandiol, 7,52 g Trimethylolpropan und 91,66 g 4,4'-Diphenylmethandiisocyanat gegeben. Das Gemisch wird unter Rühren auf 80-100°C erwärmt und solange bei dieser Temperatur gehalten, bis der Isocyanatgehalt einen Wert zwischen 12 und 17 % annimmt Es wird auf 50-60°C gekühlt und bei dieser Temperatur 140,68 g Kresol und 47,28 g Solventnaphtha zugegeben. Das Gemisch wird auf 80-100°C erwärmt und die Temperatur solange gehalten, bis der Isocyanatgehalt einen Wert von kleiner 0,2 % annimmt. Danach wird auf 40-60°C gekühlt. Es werden 239,19 g imidmodifizierter Ester aus Beispiel 2, 317,09 g Kresol, 131,63 g Solventnaphtha und 1,83 g Zinkoktoat hinzugefügt und drei Stunden gerührt.

| | |
|---|---|
| Auslaufzeit, DIN 53 211, 4 mm bei 23°C | 50 s |
| Festkörpergehalt (1g, 1h, 180°C) | 27,0 % |

### Beispiel 8 :

### Herstellung eines Polyurethanlackes

Bei einer Temperatur von kleiner 30°C werden zu 17,62 g 1-Methoxipropylacetat-2 6,03 g 1,3-Butandiol, 7,69 g Trimethylolpropan und 93,72 g 4,4'-Diphenylmethandiisocyanat gegeben. Das Gemisch wird unter Rühren auf 80-100°C erwärmt und solange bei dieser Temperatur gehalten, bis der Isocyanatgehalt einen Wert zwischen 12 und 17 % annimmt. Es wird auf 50-60°C gekühlt und bei dieser Temperatur 1.43,92 g Kresol und 48,38 g Solventnaphtha zugegeben. Das Gemisch wird auf 80-100°C erwärmt und die Temperatur solange gehalten, bis der Isocyanatgehalt einen Wert von kleiner 0,2 % annimmt. Danach wird auf 40-60°C gekühlt. Es werden 257,72 g imidmodifizierter Ester aus Beispiel 2, 297,62 Kresol, 125,46 g Solventnaphtha und 1,84 g Zinkoktoat hinzugefügt und drei Stunden gerührt.

| | |
|---|---|
| Auslaufzeit, DIN 53 211, 4 mm bei 23°C | 65 s |
| Festkörpergehalt (1g, 1h, 180°C) | 29.1 % |

### Beispiel 9 (Vergleichsbeispiel)

### Herstellung eines Polyurethanlackes

Bei einer Temperatur von kleiner 30°C werden zu 21,05 g 1-Methoxipropylacetat-2 7,21 g 1,3-Butandiol, 9,20 g Trimethylolpropan und 112,07 g 4,4'-Diphenylmethandiisocyanat gegeben. Das Gemisch wird unter Rühren auf 80-100°C erwärmt und solange bei dieser Temperatur gehalten, bis der Isocyanatgehalt einen Wert zwischen 12 und 17 % annimmt. Es wird auf 50-60°C gekühlt und bei dieser Temperatur 172,08 g Kresol und 57,84 g Solventnaphtha zugegeben. Das Gemisch wird auf 80-100°C erwärmt und die Temperatur solange gehalten, bis der Isocyanatgehalt einen Wert von kleiner 0,2 % annimmt. Danach wird auf 40-60°C gekühlt. Es werden 280,12 g imidmodifizierter Ester aus Beispiel 3, 230,50 Kresol, 107,78 g Solventnaphtha und 2,15 g Zinkoktoat hinzugefügt und drei Stunden gerührt.

| | |
|---|---|
| Auslaufzeit, DIN 53 211, 4 mm bei 23°C | 63 s |
| Festkörpergehalt (1g, 1h, 180°C) | 29.0 % |

Die in den Beispielen 4 bis 9 hergestellten Lacke werden auf einen standardmäßigen Drahtlackiermaschinen lackiert.

| Lackierbedingungen : | |
|---|---|
| Ofen | MAG AW/1A |
| Temperatur | 400°C |
| Auftragssystem | Düsen |
| Drahtdurchmesser | 0,50 mm |
| Zahl der Durchzüge | 10 |
| Zunahmegrad | 2 L |

Die lackierten Drähte wurden nach IEC 851 geprüft. Die Ergebnisse sind in den folgenden Tabellen 1 und 2 zusammengefaßt :

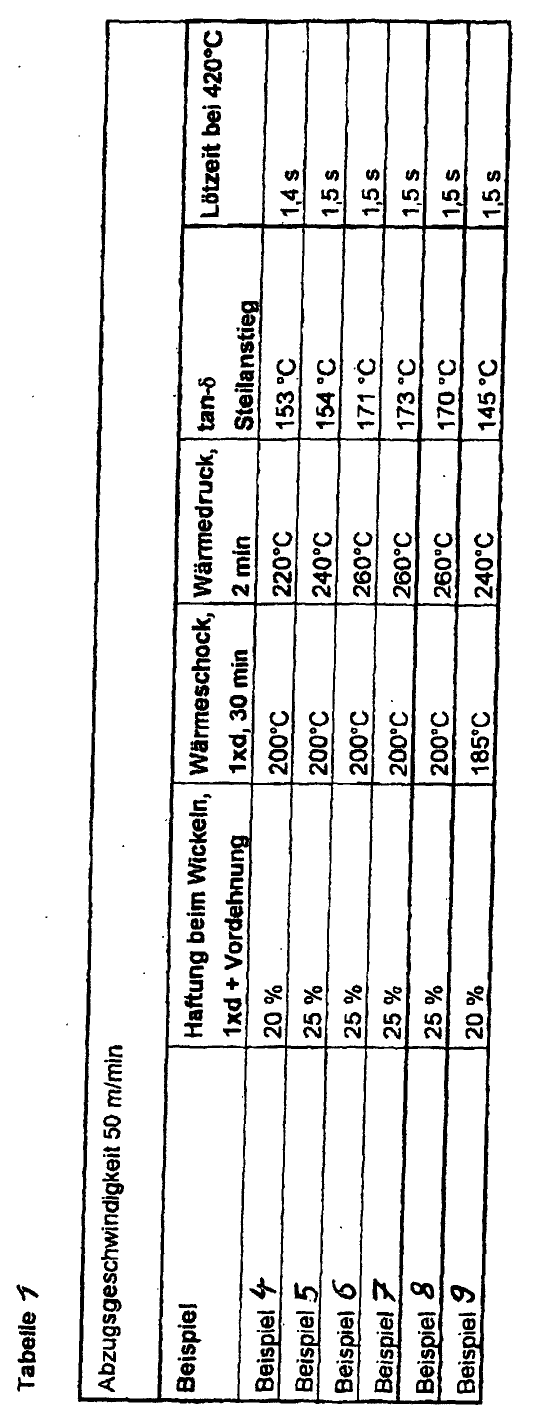

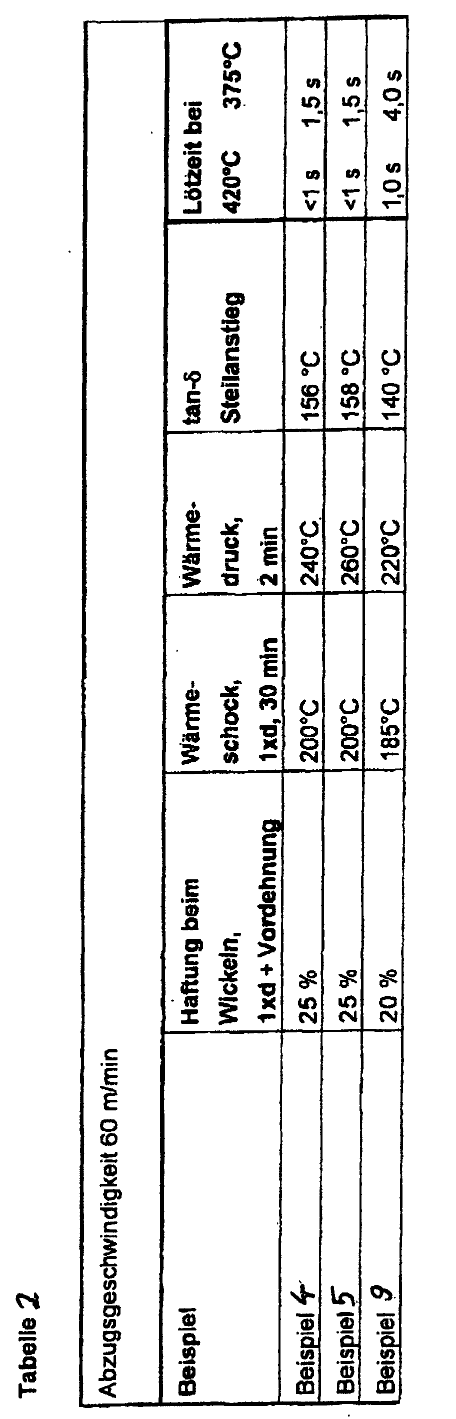

Die in den Beispielen 4-8 hergestellten erfindungsgemäßen Drahtlacke sind lagerstabil und haben, im Vergleich zum Standard, eine überwiegend bessere Haftung auf 0,5 mm Kupferdraht. Die mit den erfindungsgemäßen Lacken lackierte Drähte zeigen in der Wärmeschockbeständigkeit und z.T. auch im Wärmedruck eine signifikante Steigerung gegenüber dem Niveau der mit herkömmlichen Polyurethanlacken lackierten Drähte (Beispiel 9). Außerdem liegt der tan-δ Steilanstieg mit 153°C bis 173°C ebenfalls höher als bei dem Vergleichsbeispiel.

Der technische Vorteil dieser Drähte ist um so bedeutender, da ein verbessertes thermisches Werteniveau erreicht werden kann, ohne an einer kurzen Verzinnungszeit einzubüßen. Weiterhin ist hervorzuheben, daß ein Optimum der Eigenschaften im Vergleich zu Beispiel 9 bei einer 20 % höheren Abzugsgeschwindigkeit erzielt werden kann. Bei einer Geschwindigkeit von 60 m/min ist außerdem eine signifikante Verringerung der Lötzeit auf unter einer Sekunde bei 420°C bzw. eine deutlich niedrigere Lötbadtemperatur von 375°C unter Beibehaltung der Verzinnungszeit festzustellen. Eine höhere Abzugsgeschwindigkeit und eine geringere Verzinnungszeit bzw. eine niedrigere Lötbadtemperatur sind bedeutende technische Vorteile.

### Beispiel 10 :

### 2,6-Naphthalindicarbonsäure modifiziertes THEIC-Polyesterimid

Aus 72,9 g Ethylenglykol, 192,2 g THEIC, 83,3g Dimethylterephthalat; 104,4 g 2,6-Naphthalindicarbonsäuredimethylester, 220,1 g Trimellithsäureanhydrid, 112,0 g 4,4'-Diaminodiphenylmethan und 0,7 g Tetra-n-butyltitanat werden durch Erhitzen auf 200°C ein Polyesterimidharz hergestellt. Es fallen 96,8 g Destillat an. Bei 200°C wird der Ansatz mit 808,5 g Kresol angelöst. Die abgekühlte kresolische Lösung wird mit 288,5 g Solvent Naphtha verdünnt und mit 11,4 g Kresyltitanat katalysiert.

| | |
|---|---|
| Viskosität | 950 mPas |
| Festkörpergehalt (1g, 1h, 180°C) | 38,9 % |

### Beispiel 11 (Vergleichsbeispiel):

### THEIC-Polyesterimid

In einem Eintopfverfahren wird aus 72,9 g Ethylenglykol, 194,2 g THEIC. 166,6 g Dimethylterephthalat, 220,1 g Trimellithsäureanhydrid, 112.0 g 4,4'-Diaminodiphenylmethan und 0,7 g Tetra-n-butyltitanat durch Erhitzen auf 200°C ein Polyesterimidharz hergestellt. Es fallen 95,1 g Destillat an. Der Ansatz wird bei 200°C mit 808,5 g Kresol angelöst. Die abgekühlte kresolische Lösung wird mit 288,5 g Solvent Naphtha verdünnt und mit 11,4 g Kresyltitanat katalysiert.

| | |
|---|---|
| Viskosität | 810 mPas |
| Festkörpergehalt (1g, 1h, 180°C) | 39,8 % |

Beide Lacke wurden lackiert und nach IEC 851 ausgeprüft.

| **Lackierbedingungen :** | |
|---|---|
| Ofen | MAG AW/1A |
| Temperatur | 520°C |
| Auftragssystem | Düsen |
| Drahtdurchmesser | 0,71 mm |
| Abzugsgeschwindigkeit | 32 m/min |
| Zahl der Durchzüge | 10 |
| Zunahmegrad | 2 L |

Die Lackierergebnisse der Lacke sind in der Tabelle 3 aufgelistet. Der Lack aus Beispiel 10 enthält als Bindemittel ein mit 2,6-Naphthalindicarbonsäure modifiziertes THEIC-Polyesterimid. Der Lack aus Beispiel 11 ist ein konventionelles Polyesterimid als Vergleich.

Wie aus den Ergebnissen sichtbar, verbessern sich die Haftung auf dem Draht und der Wärmeschock durch den Einbau von 2,6-Naphthalindicarbonsäure erheblich.

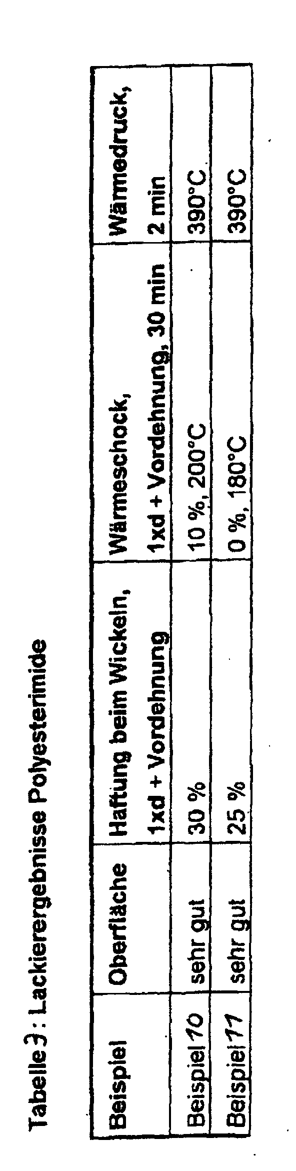

## Patentansprüche

1. Drahtbeschichtungsmittel, enthaltend Polyesterimidharze,
**dadurch gekennzeichnet, daß** die Polyesterimidharze aus mehrwertigen Alkoholen, die mit Naphthalindicarbonsäure und/oder deren veresterbaren Derivaten, ggf. im Gemisch mit weiteren Dicarbonsäuren und/oder Dicarbonsäurederivaten verestert sind, Katalysatoren, organischen Lösemitteln und Additiven sowie imidgruppenhaltigen bzw. imidgruppenbildenden Ausgangsstoffen besteht.

2. Drahtbeschichtungsmittel nach Anspruch 1,
**dadurch gekennzeichnet, daß** es
a) 15 bis 65 Gew.-%, vorzugsweise 25 bis 55 Gew.-% Polyesterimids
b) 0,01 bis 5 Gew.-%, vorzugsweise 0,3 bis 3 Gew.-% eines Katalysators, vorzugsweise Bleiacetat, Zinkacetat, Titanat oder organische Säuren, oder aminischer Katalysatoren und
c) 35 bis 80 Gew.-%, vorzugsweise 45 bis 72 Gew.-% organische Lösemittel, vorzugsweise kresolische und nicht-kresolische organische Lösemittel und Verschnittmittel
enthält.

3. Drahtbeschichtungsmittel nach einem der Ansprüche 1 oder 2,
**dadurch gekennzeichnet, daß** es
15 bis 60 Gew.-%, bevorzugt 30 bis 50 Gew.-%, bezogen auf das Gesamtgewicht des Drahtbeschichtungsmittels eines oder mehrerer Polyesterimide enthält.

4. Drahtbeschichtungsmittel nach einem der Ansprüche 1 bis 3,
**dadurch gekennzeichnet,**daßes
a) 30 bis 55 Gew.-% eines Polyesterimids,
b) 0,5 bis 2,5 Gew.-% eines Katalysators, vorzugsweise Bleiacetat, Zinkacetat, Titanat, organische Säuren oder aminische Katalysatoren,
c) 40 bis 67 Gew.-% eines organischen Lösemittels, vorzugsweise kresolische und nicht-kresolische organische Lösemittel, und Verschnittmittel enthält.

5. Drahtbeschichtungsmittel nach einem der Ansprüche 1 bis 4,
**dadurch gekennzeichnet, daß** die Polyesterimidharze 1,4-, 1,8-, 2,3-, 2.6-Naphthalindicarbonsäure enthält.

6. Drahtbeschichtungsmittel nach einem der Ansprüche 1 bis 5,
**dadurch gekennzeichnet, daß** die Polyesterimidharze als weitere Dicarbonsäuren Oxalsäure, Malonsäure, Bemsteinsäure, Glutarsäure, Adipinsäure, Pimelinsäure, Azelainsäure, Sebacinsäure, Maleinsäure, Fumarsäure, Sorbinsäure, Phthalsäure, Terephthalsäure und/oder Isophthalsäure enthält.

7. Drahtbeschichtungsmittel nach einem der Ansprüche 1 bis 6,
**dadurch gekennzeichnet, daß** die Polyesterimidharze als mehrwertige Alkohole, vorzugsweise Ethylenglycol, 1,2- und 1,3-Propylenglycol, 1,2-, 1,3- und 1,4-Butandiol, 1,5-Pentandiol, Neopentylglycol, Diethylenglycol, Triethylenglycol und/oder Triole, vorzugsweise Glycerin, Trimethylolethan, Trimethylolpropan oder Tris-(2-hydroxyethyl)isocyanurat enthält.

8. Verfahren zur Herstellung von Drahtbeschichtungsmitteln nach einem der Ansprüche 1 bis 7,
**dadurch gekennzeichnet, daß** Naphthalindicarbonsäure(n) und/oder dessen veresterbare Derivate mit mehrwertigen Alkoholen in einem organischen Lösemittel unter Verwendung von imidhaltigen oder imidbildenden Ausgangsstoffen kondensiert und mit einem Katalysator, ggf. mit einem Phenolharz, weiteren Hilfsstoffen und Additiven gemischt und zu einer Drahtbeschichtungszusammensetzung formuliert werden.

9. Verfahren zur Herstellung von Drahtbeschichtungsmitteln nach einem der Ansprüche 1 bis 8,
**dadurch gekennzeichnet, daß** das Polyesterimidharz in der Schmelze kondensiert und diese anschließend in einem organischen Lösemittel gelöst wird.

10. Verfahren zur Herstellung von Drahtbeschichtungsmitteln nach einem der Ansprüche 1 bis 8,
**dadurch gekennzeichnet, daß** das Polyesterimidharz in einem Lösemittel kondensiert wird.

11. Verwendung des Drahtbeschichtungsmittels nach einem der Ansprüche 1 bis 7 zur Beschichtung von elektrischen Leitern.

## Claims

1. Wire-coating composition comprising polyesterimide resins **characterized in that** the polyesterimide resins comprise polyhydric alcohols which are esterified with naphthalenedicarboxylic acid and/or esterifiable derivatives thereof, if desired in a mixture with further dicarboxylic acids and/or dicarboxylic acid derivatives, catalysts, organic solvents and additives, and imido-containing and/or imido-forming starting materials.

2. Wire-coating composition according to Claim 1,
**characterized in that** it comprises
a) from 15 to 65% by weight, preferably from 25 to 55% by weight, of a polyesterimide,
b) from 0.01 to 5% by weight, preferably from 0.3 to 3% by weight, of a catalyst, preferably lead acetate; zinc acetate, titanate or organic acids, or aminic catalysts, and
c) from 35 to 80% by weight, preferably from 45 to 72% by weight, of organic solvents, preferably cresolic and non-cresolic organic solvents and diluents.

3. Wire-coating composition according to either of Claims 1 and 2, **characterized in that** it comprises from 15 to 60% by weight, preferably from 30 to 50% by weight, based on the overall weight of the wire-coating composition, of one or more polyesterimides.

4. Wire-coating composition according to one of Claims 1 to 3, **characterized in that** it comprises
a) from 30 to 55% by weight of a polyesterimide,
b) from 0.5 to 2.5% by weight of a catalyst, preferably lead acetate, zinc acetate, titanate, organic acids or aminic catalysts, and
c) from 40 to 67% by weight of an organic solvent, preferably cresolic and non-cresolic organic solvents, and diluents.

5. Wire-coating composition according to one of Claims 1 to 4, **characterized in that** the polyersterimides comprise 1,4-, 1,8-, 2,3- and/or 2,6-naphthalenedicarboxylic acid.

6. Wire-coating composition according to one of Claims 1 to 5, **characterized in that** as further dicarboxylic acids the polyesterimides comprise oxalic acid, malonic acid, succinic acid, glutaric acid, adipic acid, pimelic acid, azelaic acid, sebacic acid, maleic acid, fumaric acid, sorbic acid, phthalic acid, terephthalic acid and/or isophthalic acid.

7. Wire-coating composition according to one of Claims 1 to 6, **characterized in that** as polyhydric alcohols the polyesterimides comprise preferably ethylene glycol, 1,2- and 1,3-propylene glycol, 1,2-, 1,3- and 1,4-butanediol, 1,5-pentanediol, neopentylglycol, diethylene glycol, triethylene glycol and/or triols, preferably glycerol, trimethylolethane, trimethylolpropane or tris(2-hydroxyethyl) isocyanurate.

8. Process for the preparation of wire-coating compositions according to one of Claims 1 to 7, **characterized in that** naphthalenedicarboxylic acid(s) and/or esterifiable derivatives thereof are subjected to condensation with polyhydric alcohols in an organic solvent, using imido-containing or imido-forming starting materials and the condensation product is mixed with a catalyst, if desired with a phenolic resin, further auxiliaries and additives and the mixture is formulated to give a wire-coating composition.

9. Process for the preparation of wire-coating compositions according to one of Claims 1 to 8, **characterized in that** the polyesterimide resin is condensed in the melt and this melt is subsequently dissolved in an organic solvent.

10. Process for the preparation of wire-coating compositions according to one of Claims 1 to 8, **characterized in that** the polyesterimide resin is condensed in a solvent.

11. Use of the wire-coating composition according to one of Claims 1 to 7 for the coating of electrical conductors.

## Revendications

1. Agent de revêtement de fil métallique, contenant des résines d'imide de polyester,
**caractérisé en ce que** les résines d'imide de polyester consistent en alcools polyvalents qui sont estérifiés avec de l'acide dicarboxylique au naphtalène et/ou ses dérivés estérifiables, le cas échéant en mélange avec d'autres acides dicarboxyliques et/ou dérivés d'acides dicarboxyliques, des catalyseurs, des solvants organiques et des additifs ainsi que des substances de base contenant des groupes imide ou formant des groupes imide.

2. Agent de revêtement de fil métallique selon la revendication 1,
**caractérisé en ce qu'**il contient
a) 15 à 65 % en poids, de préférence 25 à 55 % en poids, d'imide de polyester,
b) 0,01 à 5 % en poids, de préférence 0,3 à 3 % en poids d'un catalyseur, de préférence de l'acétate de plomb, de l'acétate de zinc, du titanate ou des acides organiques ou des catalyseurs aminés et
c) 35 à 80 % en poids, de préférence 45 à 72 % en poids, de solvants organiques, de préférence des solvants et des diluants organiques au crésol et exempts de crésol.

3. Agent de. revêtement de fil métallique selon une des revendications 1 ou 2,
**caractérisé en ce qu'**il
contient 15 à 60 % en poids, de préférence 30 à 50 % en poids, par rapport au poids total de l'agent de revêtement de fil métallique, d'un ou plusieurs imides de polyester.

4. Agent de revêtement de fil métallique selon une des revendications 1 à 3,
**caractérisé en ce qu'**il contient
a) 30 à 55 % en poids d'un imide de polyester,
b) 0,5 à 2,5 % en poids d'un catalyseur, de préférence de l'acétate de plomb, de l'acétate de zinc, du titanate, des acides organiques ou des catalyseurs aminés,
c) 40 à 67 % en poids d'un solvant organique, de préférence des solvants et des diluants organiques au crésol et exempts de crésol.

5. Agent de revêtement de fil métallique selon une des revendications 1 à 4,
**caractérisé en ce que** la résine d'imide de polyester contient de l'acide 1,4-, 1,8-, 2,3-, 2,6-dicarboxylique au naphtalène.

6. Agent de revêtement de fil métallique selon une des revendications 1 à 5,
**caractérisé en ce que** la résine d'imide de polyester contient comme autres acides dicarboxyliques de l'acide oxalique, de l'acide malonique, de l'acide succinique, de l'acide glutarique, de l'acide adipique, de l'acide pimélique, de l'acide azélaïque, de l'acide sébacique, de l'acide maléique, de l'acide fumarique, de l'acide sorbique, de l'acide phtalique, de l'acide téréphtalique et/ou de l'acide isophtalique.

7. Agent de revêtement de fil métallique selon une des revendications 1 à 6,
**caractérisé en ce que** la résine d'imide de polyester contient comme alcools polyvalents de préférence d'éthylèneglycol, du 1,2- et 1,3-propylèneglycol, du 1,2-, 1,3- et 1,4-butanediol, du 1,5-pentanediol, du néopentylglycol, du diéthylèneglycol, du triéthylèneglycol et/ou des triols, de préférence de la glycérine, du triméthyloléthane, du triméthylolpropane ou du tris-(2-hydroxyéthyle)isocyanurate.

8. Procédé de fabrication d'agents de revêtements de fil métallique selon une des revendications 1 à 7,
**caractérisé en ce que** de l'acide(des acides) dicarboxylique(s) au naphtalène et/ou ses(leurs) dérivés estérifiables est(sont) condensé(s) avec des alcools polyvalents dans un solvant organique en utilisant des substances de base contenant des imides ou formant des imides et mélangé(s) avec un catalyseur, le cas échéant avec une résine au phénol, d'autres substances auxiliaires et additifs et formulé(s) pour aboutir à une composition servant au revêtement de fil métallique.

9. Procédé de fabrication d'agents de revêtement de fil métallique selon une des revendications 1 à 8,
**caractérisé en ce que** la résine d'imide de polyester est condensée dans la masse fondue et que celle-ci est ensuite dissoute dans un solvant organique.

10. Procédé de fabrication d'agents de revêtement de fil métallique selon une des revendications 1 à 8,
**caractérisé en ce que** la résine d'imide de polyester est condensée dans un solvant.

11. Utilisation de l'agent de revêtement de fil métallique selon une des revendications 1 à 7 pour le revêtement de conducteurs électriques.
